# FASCICULE DE BREVET EUROPEEN

(11) **EP 2 896 048 B1**
(45) Date de publication et mention de la délivrance du brevet: **09.11.2016**
(21) Numéro de dépôt: 13760033.4
(22) Date de dépôt: 09.09.2013
(51) Int. Cl.: G21C 19/20

(54) **PROCEDE DE REMPLACEMENT D'UNE CLAVETTE DE GUIDAGE D'UN EQUIPEMENT INTERNE DE REACTEUR NUCLEAIRE**
VERFAHREN ZUM ERSETZEN EINER SCHIENE ZUR FÜHRUNG EINES TEILS EINER EINRICHTUNG IN EINEM KERNREAKTOR
METHOD FOR REPLACING A RAIL FOR GUIDING A PIECE OF EQUIPMENT INSIDE A NUCLEAR REACTOR

(30) Priorité: 13.09.2012 FR 1258614
(43) Date de publication de la demande: 22.07.2015
(73) Titulaire: AREVA NP, 92400 Courbevoie (FR)
(72) Inventeur: CAHOUET, Laurent, F-71150 Chaudenay (FR); POLLIER, Denis, F-71530 Champforgeuil (FR); GRYPCZYNSKI, Daniel, F-69006 Lyon (FR)
(74) Mandataire: Lavoix
(86) Numéro de dépôt international: PCT/EP2013/068573
(87) Numéro de publication internationale: WO 2014/040942

(56) Documents cités:
- FR-A1- 2 763 169
- US-A1- 2010 146 759

## Description

L'invention concerne en générale la maintenance des équipements internes de réacteurs nucléaires.

Plus précisément, l'invention concerne un procédé de remplacement d'une clavette de guidage d'un équipement interne d'un réacteur nucléaire :
- le réacteur nucléaire ayant une cuve présentant un axe central, dans laquelle est placé l'équipement interne, une clavette d'origine coopérant avec une glissière pour assurer le guidage de l'équipement interne par rapport à un élément de référence situé dans la cuve (cf US2010/0146759);
- la clavette d'origine étant fixée à l'un de l'équipement interne et de l'élément de référence, la glissière étant fixée à l'autre de l'équipement interne et de l'élément de référence.

Le coeur du réacteur nucléaire comporte typiquement des assemblages de combustible nucléaire de forme générale prismatique, disposés à l'intérieur des équipements internes inférieurs du réacteur.

Ces équipements internes inférieurs comportent en particulier une enveloppe de coeur sensiblement cylindrique, fixée à l'intérieure de la cuve dans une disposition sensiblement coaxiale par rapport à la cuve, et une plaque de support de coeur solidaire d'une extrémité inférieure de l'enveloppe de coeur.

La cuve contient également des équipements internes supérieurs, avec en particulier une plaque supérieure de coeur qui vient reposer sur la partie supérieure des assemblages de combustible nucléaire par l'intermédiaire de ressorts.

Les équipements internes supérieurs et inférieurs sont suspendus à l'intérieur de la cuve. Ils sont fixés à la virole de la cuve, légèrement en dessous du plan de raccordement du couvercle de cuve. De plus, les équipements internes inférieurs sont guidés en partie inférieure par plusieurs clavettes de guidage réparties autour de la plaque de support de coeur et fixées à celle-ci. Chaque clavette coopère avec une glissière fixée à la cuve. Les clavettes et les glissières coopèrent pour limiter les déplacements circonférentiels des équipements internes inférieurs autour de l'axe central, et pour limiter les déplacements radiaux de la plaque de support de coeur, dans les conditions accidentelles. En revanche, il autorise les déplacements de la plaque de support de coeur et de l'enveloppe de coeur suivant une direction axiale par rapport à la cuve, par exemple sous l'effet d'une dilation différentielle.

Du fait du frottement des clavettes contre les glissières, les surfaces des clavettes s'usent et, à terme, il y a un risque que le débattement des équipements internes dépasse les normes autorisées.

Dans ce contexte, l'invention vise à proposer un procédé permettant de remplacer les clavettes de guidage, en vue de résoudre le problème ci-dessus.

A cette fin, l'invention vise un procédé de remplacement d'une clavette de centrage d'un équipement interne d'un réacteur nucléaire selon l'objet de la revendication 1.

Les surfaces saines des faces latérales de la clavette d'origine permettent de définir une référence de position circonférentielle pour positionner la clavette de remplacement. Ceci permet de simplifier considérablement la mise en position de la clavette de remplacement.

Les surfaces saines des faces latérales de la clavette d'origine sont des surfaces qui ne sont pas situées en vis-à-vis des surfaces utiles de guidage de la glissière. Ces surfaces ne frottent donc pas contre les surfaces utiles de guidage de la glissière et ne sont pas endommagées. Ces surfaces sont situées aux deux extrémités axiales des faces latérales. Les faces latérales sont en effet axialement plus longues que les surfaces utiles de guidage de la glissière.

Par ailleurs, la clavette comporte une partie de guidage définissant les deux faces latérales, et une partie de fixation à l'équipement interne ou à l'élément de référence. Seule la partie de guidage est engagée dans la glissière. La zone de chaque face latérale située le long de la partie de fixation constitue une surface saine, du fait qu'elle n'est pas engagée dans la glissière.

En fonction de la forme de la glissière et de la forme des faces latérales de la clavette, il peut exister d'autres surfaces saines sur les faces latérales.

Comme indiqué ci-dessus, la clavette peut être destinée au guidage des équipements internes inférieurs par rapport à la cuve. Dans ce cas, la clavette est fixée aux équipements internes inférieurs, et plus spécifiquement à la plaque de support de coeur. La glissière est par exemple reçue dans un embrèvement de forme parallélépipédique usinée dans un élément soudé sur la surface intérieure de la cuve. La cuve constitue dans ce cas l'élément de référence.

La clavette est typiquement fixée directement à la plaque de support de coeur (cas des réacteurs du palier 900 MWe de type connu sous le sigle CPY). En variante, la clavette est fixée à la plaque de support de coeur par une pièce intermédiaire soudée sur la plaque de support de coeur (cas des réacteurs du palier 900 MWe, du type CPO).

Le procédé est applicable aux réacteurs nucléaires des autres paliers.

Selon une autre variante, la clavette est montée sur une pièce de support solidaire de la cuve, et la glissière est montée directement ou indirectement sur la plaque de support de coeur.

Dans un autre mode de réalisation, la clavette est prévue pour guider les équipements internes supérieurs de la cuve par rapport aux équipements internes inférieurs. Dans ce cas, la clavette est fixée à l'un des équipements internes supérieurs et des équipements internes inférieurs. La glissière est fixée à l'autre des équipements internes inférieurs et des équipements internes supérieurs. Les équipements internes inférieurs constituent ici l'élément de référence.

Comme indiqué plus haut, le terme « clavette de centrage » signifie ici que la clavette est prévue pour empêcher le déplacement des équipements internes circonférentiellement autour de l'axe central de la cuve, et pour limiter les déplacements radiaux. Les faces latérales de la clavette sont sensiblement radiales par rapport à l'axe central de la cuve, au sens où, quand les équipements internes sont disposés à l'intérieur de la cuve, chaque face latérale forme un angle de moins de 5° par rapport à au moins un plan radial contenant l'axe central.

Le procédé est typiquement mis en oeuvre dans une piscine, et plus précisément dans la piscine qui jouxte la cuve du réacteur. Avant mise en oeuvre du procédé, les équipements internes sont extraits hors de la cuve du réacteur, et sont disposés sur la structure de stockage existante, située en fond de piscine.

Le repérage de la position circonférentielle d'origine des surfaces saines de la clavette d'origine permet de calculer la position des deux plans dans lesquels s'inscrivent les faces latérales de la clavette d'origine, et ce par rapport au repère fixe. A l'étape de mise en position, la clavette de remplacement est placée par rapport au repère fixe dans une position telle que ces faces latérales soient situées dans lesdits plans d'origine par rapport au repère fixe.

La position circonférentielle des faces latérales de la clavette de remplacement doit être particulièrement précise, car le jeu circonférentiel entre les faces latérales de la clavette de remplacement et la glissière est extrêmement réduit. Le jeu fonctionnel circonférentiel entre la clavette de remplacement et de la glissière est de l'ordre de 0.5 mm.

Le procédé peut également présenter une ou plusieurs des caractéristiques ci-dessous, considéré individuellement ou selon toutes les combinaisons techniquement possibles.

Selon un aspect de l'invention, l'étape de repérage est effectuée à l'aide d'un palpeur monté sur un robot multiaxes. Le robot est par exemple un robot à six axes, disposé en fond de piscine. De tels robots sont connus. Le palpeur est un équipement de type connu. En variante, l'étape de repérage est effectuée à l'aide d'un laser ou par topométrie.

Le fait d'utiliser un palpeur monté sur un robot multiaxes est particulièrement avantageux, puisqu'on peut utiliser le même robot pour manipuler les outils réalisant les différentes opérations mises en oeuvre dans le procédé, notamment la mise en position de la clavette de remplacement. L'utilisation des informations de position issues de l'étape de repérage pour la mise en position de la nouvelle clavette est ainsi plus simple. La précision de la position de la clavette de remplacement est plus grande.

Selon un aspect de l'invention, le repère de référence est une structure fixe, sur laquelle est montée au moins un équipement mis en oeuvre pour les étapes de repérage et de mise en position. En d'autres termes, la structure fixe est un support placé en fond de piscine, prévu pour permettre un montage répété, extrêmement précis, de l'équipement mis en oeuvre pour l'étape de repérage et pour l'étape de mise en position. Cet équipement est le même pour les deux étapes, de manière à garantir une excellente précision pour la mise en position circonférentielle de la clavette de remplacement. Cet équipement est typiquement un robot multiaxes. Ce robot est équipé de différents outils, nécessaires pour les étapes de repérage et de mise en position. Dans une variante non préférée, les étapes de repérage et de mise en position sont effectuées par deux équipements différents l'un de l'autre, montés sur la même structure fixe.

Selon un aspect de l'invention, l'étape de mise en position comprend :
- une sous étape de percement d'au moins un alésage de positionnement dans l'équipement interne ou l'élément de référence;
- une sous étape d'engagement d'au moins un pion de positionnement dans l'alésage de positionnement à travers la clavette de remplacement.

Typiquement, on réalise à la sous étape de percement deux alésages de positionnement, ou plus de deux alésages de positionnement, et on engage à la sous étape d'engagement deux pions de positionnement dans les alésages de positionnement, ou plus de deux pions de positionnement.

La position finale de la clavette de remplacement est déterminée principalement par la position des alésages de positionnement. Un tel mode de positionnement de la clavette de remplacement est simple et précis.

Dans ce cas, une position de l'alésage de positionnement par rapport à l'équipement interne ou l'élément de référence est avantageusement déterminée à partir de la position circonférentielle d'origine des surfaces saines. Cette position est obtenue par calcul.

Selon un aspect de l'invention, la sous étape de percement est effectuée avant l'étape de démontage de la clavette d'origine. Ceci est particulièrement avantageux, car il est possible de contrôler le positionnement des alésages directement par rapport à la position des surfaces saines des faces latérales, et non pas par rapport aux données de position enregistrées.

Pour ce faire, on perce un passage à travers la partie de fixation de la clavette d'origine de manière à accéder à l'élément interne ou à l'élément de référence situé sous la partie de fixation.

En variante, la sous étape de percement est effectuée après l'étape de démontage de la clavette d'origine.

Quand la sous-étape de percement est effectuée avant l'étape de démontage de la clavette d'origine, on réalise le perçage de la partie de fixation de la clavette d'origine de manière grossière, soit par électroérosion soit par une autre technique d'usinage.

Selon un aspect de l'invention, le percement de l'alésage est effectué par électroérosion.

L'électroérosion est une technique d'usinage dans lequel on crée des micros décharges électriques entre une électrode et la pièce à usiner. L'opération est effectuée dans un bain isolant d'huile ou d'eau déminéralisée. Dans la technique connue sous le nom d'électroérosion par enfonçage, l'électrode a une forme complémentaire de la forme de l'alésage à usiner.

L'électroérosion présente l'avantage de permettre une bonne précision dans les dimensions de l'alésage. Par ailleurs, contrairement aux techniques d'usinage mécaniques, le manipulateur comportant la tête d'électroérosion n'est pas soumis des forces de réactions importantes au cours de l'étape d'usinage. De ce fait, le manipulateur peut être une structure légère, sans que la précision de l'opération soit affectée.

Selon un autre aspect de l'invention, l'alésage présente un fond tronconique. En effet, bien que l'électroérosion permette d'usiner l'alésage avec une grande précision, notamment pour son diamètre, cette précision n'est malgré tout pas aussi grande que celle qu'il est possible d'obtenir en atelier avec les meilleures techniques d'usinage. Le fait de conformer le fond de l'alésage de manière tronconique, permet de compenser une éventuelle imprécision dans le diamètre de l'alésage. Le pion de positionnement est engagé en force dans l'alésage. L'extrémité du pion vient en prise avec la partie tronconique, à une profondeur plus ou moins grande en fonction de la précision de l'usinage.

Selon un autre aspect de l'invention, le procédé comprend une étape de repérage d'une position axiale d'une surface de référence de la clavette d'origine sensiblement perpendiculaire à l'axe central, l'étape de mise en position d'une clavette de remplacement par rapport à l'équipement interne ou l'élément de référence étant effectuée en utilisant aussi ladite position axiale.

Le repérage est effectué avec un palpeur déplacé par un robot multiaxes, comme pour les surfaces saines des faces latérales. La surface de référence correspond typiquement à une surface de la partie de guidage de la clavette, tourné vers le fond inférieur ou le fond supérieur de la cuve. Ces surfaces sont saines, car elles ne frottent jamais contre la glissière. Les informations acquises pendant l'étape de repérage permettent de déterminer la position du plan dans lequel s'inscrit la surface de référence de la clavette d'origine. A l'étape de mise en position, la surface de référence correspondante de la clavette de remplacement est positionnée dans ledit plan.

Il est à noter que la précision demandée suivant la direction axiale pour le positionnement de la clavette de remplacement est nettement inférieure à la précision demandée circonférentiellement.

D'autres caractéristiques et avantages de l'invention ressortiront de la description détaillée qui en est donnée ci-dessous, à titre indicatif et nullement limitatif, en référence aux figures annexées, parmi lesquels :
- la figure 1 est une représentation simplifiée, en coupe axiale, de la cuve d'un réacteur nucléaire ;
- les figures 2 et 3 sont des vues en coupe radiale et de face d'une clavette de centrage des équipements internes inférieurs du réacteur de la figure 1 ;
- la figure 4 illustre de manière schématique la position des faces latérales de la clavette ;
- la figure 5 est une vue agrandie d'un détail de la figure 1, montrant les surfaces saines de la clavette ;
- la figure 6 est un diagramme d'étapes illustrant le procédé de l'invention ;
- la figure 7 est une représentation schématique simplifiée des équipements internes inférieurs disposés en fond de piscine, et du robot multiaxes utilisé pour l'étape de repérage ;
- la figure 8 est une représentation schématique simplifiée de la tête du palpeur utilisé pour l'étape de repérage ;
- les figures 9 et 10 sont des vues similaires à celles des figures 2 et 3, et montrent les positions des alésages usinés à travers la clavette d'origine ;
- les figures 11, 12 et 13 illustrent différentes sous étape de l'étape de mise en position et de l'étape de fixation de la clavette de remplacement ; et
- les figures 14 et 15 sont des vues similaires à celles des figures 2 et 3, pour un autre type de réacteur nucléaire.

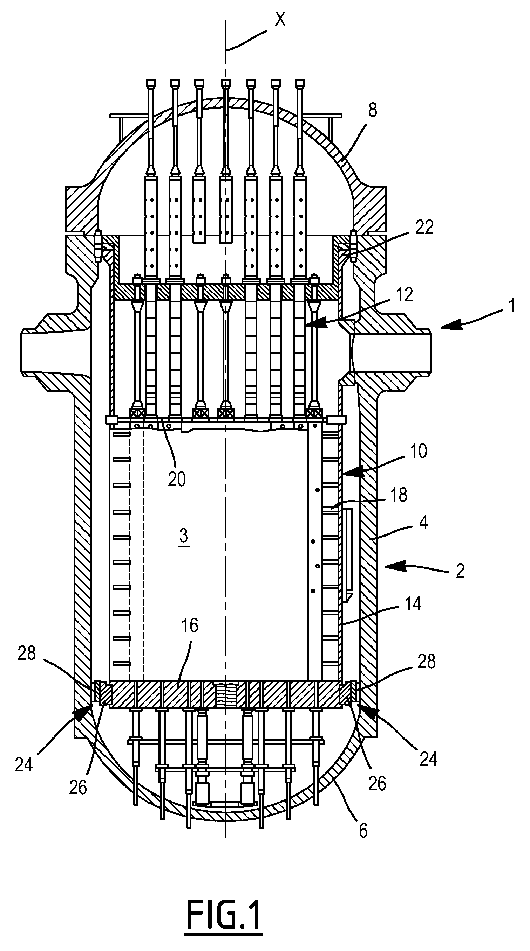

Le réacteur nucléaire 1 représenté sur la figure 1 est du type à eau sous pression (PWR) du palier 900 MWe, du type CPY. Il comprend une cuve 1, dans lequel est disposé un coeur 2. Le coeur 2 comporte une pluralité d'assemblage de combustible nucléaire, de forme générale prismatique. La cuve présente un axe central X, sensiblement vertical. La cuve présente une virole 4 sensiblement cylindrique, un fond inférieur hémisphérique 6, fermant une extrémité inférieure de la virole 4, et un couvercle amovible 8, fermant une extrémité supérieure de la virole 4.

Le réacteur nucléaire 1 comporte encore des équipements internes inférieurs 10 (EII) et des équipements internes supérieurs 12, disposés à l'intérieur de la cuve 2. Les équipements internes inférieurs 10 comportent une enveloppe de coeur 14 de forme générale cylindrique et une plaque de support de coeur 16, solidaire d'une extrémité inférieure de l'enveloppe de coeur 14. L'enveloppe de coeur 14 est dans une disposition coaxiale par rapport à la cuve. Les assemblages de combustible sont disposés à l'intérieur de l'enveloppe de coeur, et reposent sur la plaque de support de coeur 16. L'enveloppe de coeur 14 renferme un cloisonnement 18, s'étendant à la périphérie du coeur 3 et destiné à maintenir les assemblages de combustible nucléaire en position.

Les équipements internes supérieurs 12 comprennent une plaque supérieure de coeur 20, qui repose sur la partie supérieure des assemblages du coeur 3 par l'intermédiaire de ressort. Les équipements internes inférieurs et supérieurs 10, 12 sont suspendus à l'intérieur de la cuve 2 par une partie supérieure 22 qui est fixée sur un bord supérieur de la virole 4, légèrement en dessous du plan de raccordement du couvercle 8 sur la virole 4.

Dans l'exemple représenté, quatre dispositifs 24 de guidage sont répartis autour de la plaque de support de coeur 16, de manière à maintenir les équipements internes inférieurs 10 en position circonférentiellement autour de l'axe X, et radialement par rapport à l'axe X. Toutefois, les dispositifs de guidage 24 autorisent des déplacements axiaux des équipements internes inférieurs 10 relativement à la cuve, par exemple sous l'effet des dilatations différentielles.

Chaque dispositif de guidage 24 comporte une clavette 26, fixée sur un bord périphérique externe de la plaque de support de coeur 16, et une partie femelle 28 rigidement fixée sur une surface intérieure de la virole 4 de la vue, en vis-à-vis de la clavette 26.

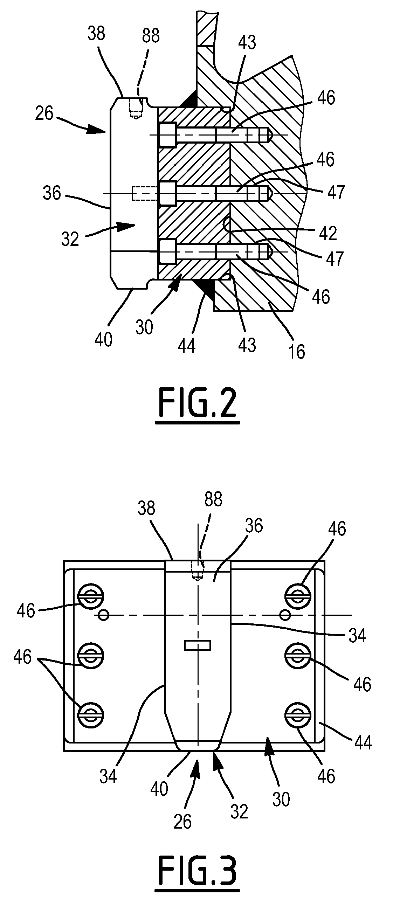

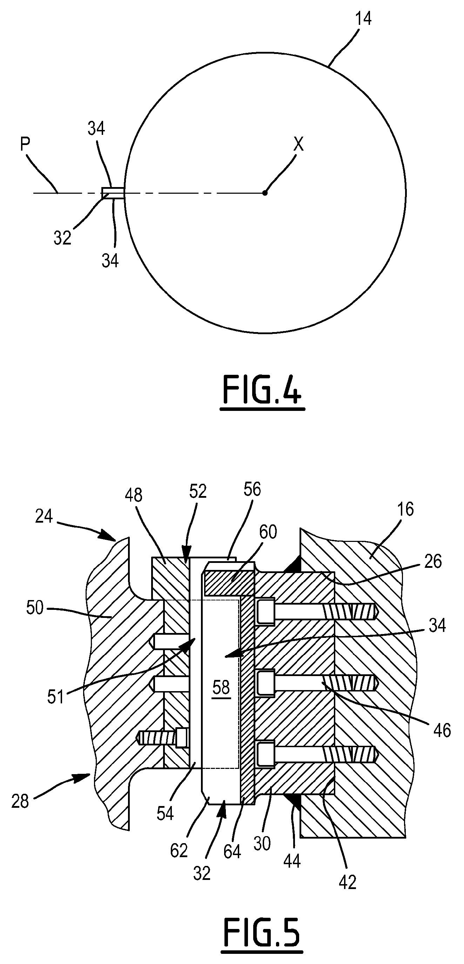

La clavette 26 comporte une partie 30 de fixation à la plaque de support de coeur 16, prolongée radialement vers l'extérieur par une partie de guidage 32. Les parties 30 et 32 (figures 2 et 3) présentent axialement sensiblement la même hauteur. En revanche, la partie de fixation 30 présente circonférentiellement une largeur très supérieure à la partie de guidage 32. La partie de guidage 32 est délimitée circonférentiellement par deux faces latérales 34 opposées l'une à l'autre, radialement vers l'extérieur par une face externe 36, et horizontalement vers le haut et vers le bas par des faces supérieures et inférieures 38 et 40. Les faces 34 s'étendent dans des plans sensiblement radiaux par rapport à l'axe X, comme visible sur la figure 4.

La partie de fixation 30 est sensiblement parallélépipédique. Elle est rigidement fixée dans un embrèvement 42 usiné dans le bord périphérique externe de la plaque de support de coeur 16.

Plus précisément, la partie de fixation 30 est montée frettée dans l'embrèvement 42. Le frettage est situé sur des flancs d'encastrement horizontaux 43 de l'emboîtement 42. Par ailleurs, une ligne de soudure périphérique 44 solidarise la partie de fixation 30 à la plaque de support de coeur 16. Enfin, six vis 46 complètent la fixation de la partie 30 à la plaque de support de coeur 16. Les extrémités filetées des vis 46 sont vissées dans des trous taraudés 47 de la plaque de support de coeur 16.

Comme illustré sur la figure 5, la partie femelle 28 comporte une glissière 48 et un support massif 50, appelé support en M, rigidement fixé à la virole 4 de la cuve. La glissière 48 présente, perpendiculairement à l'axe X, une section en U ouverte radialement vers l'intérieur de la cuve. Circonférentiellement, l'écartement entre les faces internes 51 des deux branches du U est légèrement supérieur à l'écartement entre les deux faces latérales 34 de la clavette.

Comme visible sur la figure 5, la glissière 48 présente une partie supérieure 52 évasée.

Plus précisément, les faces internes 51 présentent chacune une zone inférieure 54 et une zone supérieure 56. Les zones 54 des deux branches sont parallèles l'une à l'autre, et sensiblement radiale par rapport à l'axe X. La zone 56 est inclinée par rapport à la zone 54, les zones 56 des deux branches s'écartant l'une de l'autre quand on les suit axialement à partir de la zone 54 correspondante vers le haut. Les zones 54 constituent les surfaces utiles de guidage de la glissière.

Les zones 56 couvrent environ 20% de la hauteur axiale de la glissière.

La partie de guidage 32 de la clavette est normalement engagée dans la glissière 48, avec un jeu de 0,25 à 0,3 mm entre chaque face 34 et la face interne 51 correspondante.

Les zones 58 des faces latérales 34 sont placées en face des zones inférieures 54 de la glissière. Des zones 60 des faces 34, situées au dessus des zones 58, sont en regard des zones 56 de la glissière. Des zones 62 des faces 34, situées en dessous des zones 58 sont situées hors de la glissière, en dessous de celle-ci. Par ailleurs, une bande 64 de chaque face 34, s'étendant axialement sur toute la hauteur de la face 34, le long de la ligne de jonction de la face 34 avec la partie de fixation 30 de la clavette, est située hors de la glissière. La face externe 36 de la clavette est engagée dans la glissière 48, avec un écartement de l'ordre de 18mm par rapport au fond de la glissière 48.

Au cours de la vie du réacteur, les zones 58 des faces 34 viennent frotter contre les zones 54 de la glissière, du fait du débattement des équipements internes inférieurs par rapport à la cuve. Les zones 58 sont usées et endommagées au bout d'un certain nombre d'années de fonctionnement du réacteur. En revanche, les zones 60, 62 et 64 des faces 34 ne viennent jamais frotter contre la glissière. Les zones 62 et 64 sont situées hors de la glissière et ne peuvent dons pas frotter contre la glissière. Les zones 60 sont situées au niveau des parties évasées 52 de la glissière, de telle sorte qu'elles ne touchent pas les zones 56.

Les zones 60, 62 et 64 restent donc saines, c'est-à-dire non endommagées, même après de nombreuses années de fonctionnement du réacteur.

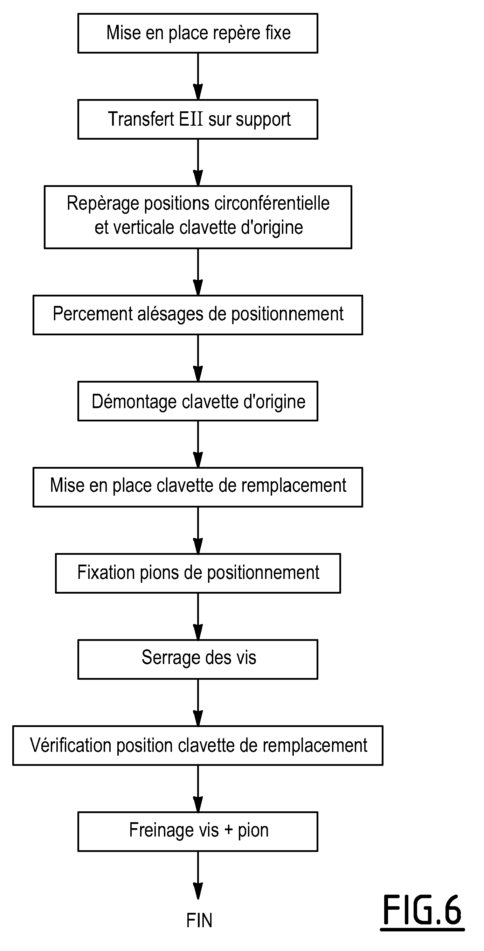

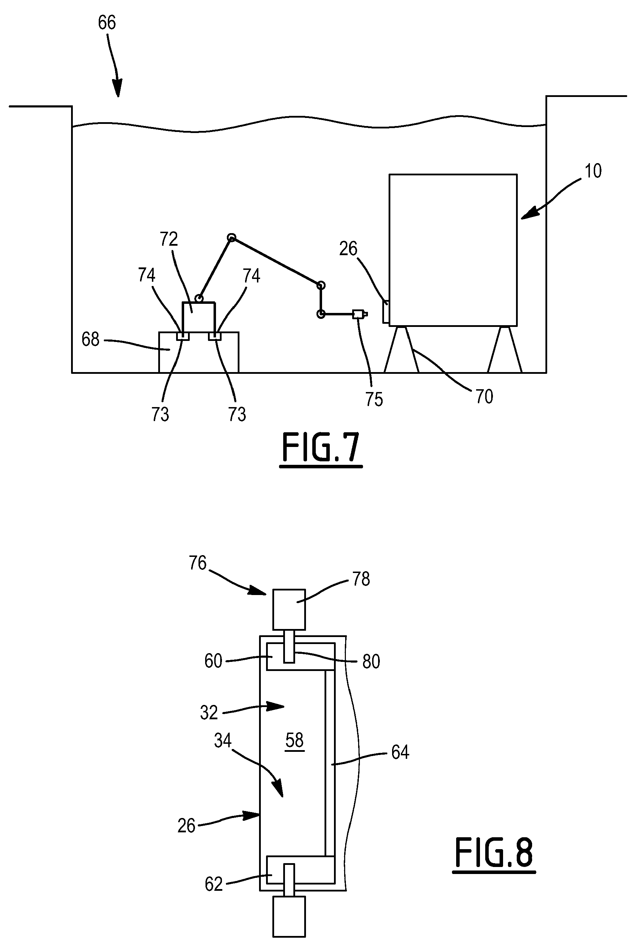

Le procédé de remplacement des clavettes 26 va maintenant être décrit. Les principales étapes de ce procédé sont représentées sur la figure 6. Comme le montre la figure 7, ces différentes étapes se déroulent sous eau, dans la piscine 66 du réacteur.

Le procédé comporte les étapes suivantes :
- mise en place d'un repère fixe 68 en fond de piscine, à proximité de la structure de support 70 prévu pour recevoir les EII10 ;
- transfert des EII10 depuis la cuve du réacteur jusque sur la structure de support 70 ;
- repérage des positions circonférentielles des surfaces saines de la clavette d'origine 26, et de la position axiale de la clavette d'origine 26, par rapport au repère fixe 68 ;
- percement d'alésages de positionnement pour une clavette de remplacement, dans la plaque de support de coeur 16 ;
- démontage de la clavette d'origine 26 ;
- mise en place de la clavette de remplacement ;
- fixation de la clavette de remplacement sur la plaque de support de coeur 16, par l'intermédiaire de pions de positionnement engagés dans les alésages de positionnement ;
- serrage des vis de fixation de la clavette de remplacement à la plaque de support de coeur 16;
- vérification de la position de la clavette de remplacement ;
- freinage des vis et des pions.

Ces différentes étapes vont maintenant être détaillées.

Le repère fixe 68 est un support destiné à recevoir un robot multiaxes 72, comme le montre la figure 7. Le repère fixe 68 permet le montage répété, avec une grande précision de positionnement, du robot 72. Le robot 72 dispose d'une palette d'outils lui permettant de réaliser la plus grande partie des opérations du procédé.

Le repère fixe 68 comprend par exemple une pluralité de logements 73 dont les positions sont soigneusement repérées. Le robot 72 est équipé de pions 74, prévus pour s'engager dans les logements 72 et assurer un positionnement précis du robot 72 par rapport au repère fixe 68.

La structure de support 70 est un équipement prévu pour recevoir les EII 10. Il équipe normalement les piscines de réacteur.

Les EII sont transférés sur la structure de support 70 par l'intermédiaire du pont polaire du réacteur.

Les positions circonférentielles des surfaces saines de la clavette sont repérées à l'aide d'un palpeur 75, déplacé par le robot 72. Typiquement, le palpeur repère les positions circonférentielles des zones saines de la clavette en au moins deux points, par exemple situées à deux niveaux différents de chaque face 34. Par exemple, le palpeur va repérer la position circonférentielle d'une zone de la surface 60, et la position circonférentiellement d'une zone de la surface 64 située vers le bas de la clavette.

Comme visible sur la figure 8, le palpeur 75 comporte une tête 76 avec un premier cylindre 78 formant l'interface avec le robot 72, prolongé par un second cylindre 80 de diamètre réduit par rapport au premier cylindre 78. Pour réaliser l'opération de repérage, le robot 72 vient d'abord faire porter l'extrémité libre du cylindre 80 contre la zone à repérer, avec une orientation sensiblement perpendiculaire du cylindre 80 par rapport à la zone. Puis, le robot fait pivoter le cylindre 80 par rapport à la zone, jusqu'à ce qu'une génératrice du cylindre 80 soit plaquée contre la zone à repérer. On repère ainsi une droite du plan dans lequel s'inscrit la zone à repérer. L'opération est répétée avec une autre zone des surfaces saines, ce qui permet de repérer une seconde droite faisant partie dudit plan. On peut ainsi, connaissant deux droites, déterminer la position exacte du plan contenant les surfaces saines par rapport au repère de référence 68.

La même opération est effectuée en vue de déterminer la position axiale, c'est-à-dire verticale, de la surface inférieure 40 de la clavette. Cette surface est saine, puisqu'elle ne frotte pas contre la glissière. Le palpeur 75 vient repérer, comme décrit ci-dessus, le niveau vertical de la face 40 par rapport au repère fixe 68.

Ces données sont mises en mémoire dans le calculateur pilotant le robot 72.

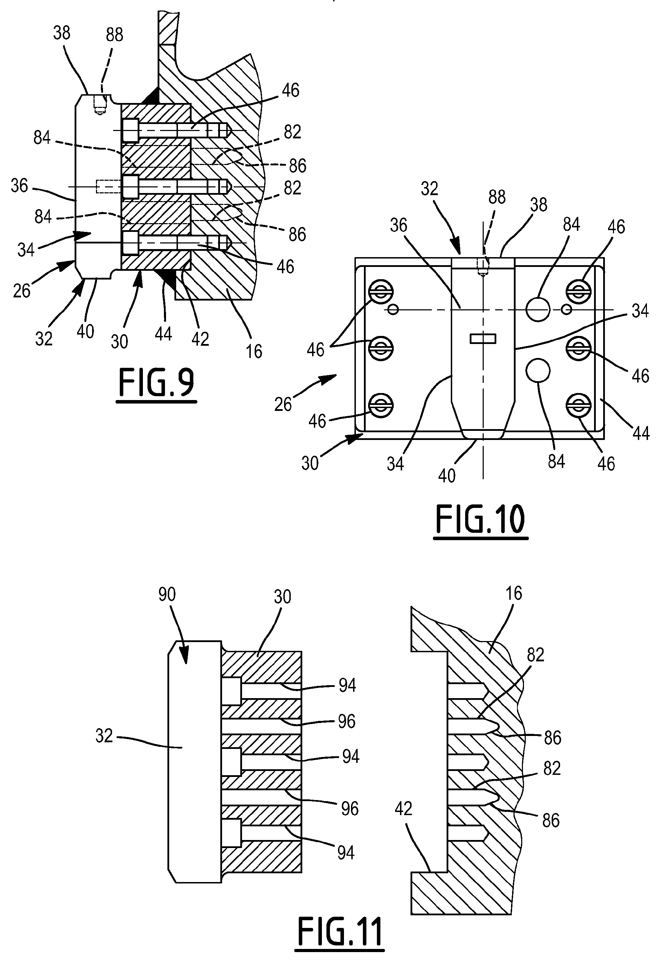

A l'étape suivante, des alésages 82 sont percés dans la plaque de support de coeur 16, comme illustré sur la figure 9. Ces alésages 82 sont percés à l'aide d'un outil d'électroérosion déplacé par le robot 72. Deux alésages 82 sont percés, situés d'un même côté circonférentiel de la partie de guidage 32 de la clavette (figure 10).

Les alésages 82 sont percés avant démontage de la clavette d'origine. Pour ce faire, il est nécessaire de créer des passages 84 à travers la partie de fixation 30 de la clavette, au droit des alésages 82.

La position circonférentielle des alésages 82 est calculée par rapport au repère de référence 68 sur la base de la position circonférentielle des plans des deux faces 34, préalablement repérée à l'étape précédente. La position verticale des alésages 82 est déterminée sur la base de la position verticale de la surface 40 de la clavette d'origine, repérée à l'étape précédente.

Comme visible sur la figure 9, les passages 84 présentent un diamètre nettement plus grand que celui des alésages 82. Ils sont réalisés par exemple avec un outil d'usinage mécanique porté par le robot 72. Il n'est pas important d'avoir une bonne précision pour le diamètre des passages 84.

Une fois les passages 84 réalisés, les alésages 82 sont usinés, à l'aide d'un outil d'électroérosion. Les alésages 82 présentent chacun une partie de fond de forme tronconique 86.

Pour le démontage de la clavette d'origine 26, on supprime d'abord la soudure périphérique 44 avec un outil d'électroérosion porté par le robot 72. On supprime également les points de soudure (non représentées) des clavettes d'arrêts des vis 46.

Puis, on accouple une perche à la clavette 26, par exemple par l'intermédiaire du trou taraudé 88 existant dans la face supérieure 38 de la clavette.

On débloque et dévisse ensuite les vis 46, par exemple à l'aide d'un outil adapté porté par le robot 72. Enfin, on dégage la clavette d'origine de l'embrèvement 42 et on l'évacue par l'intermédiaire de la perche accouplée dans l'orifice 88.

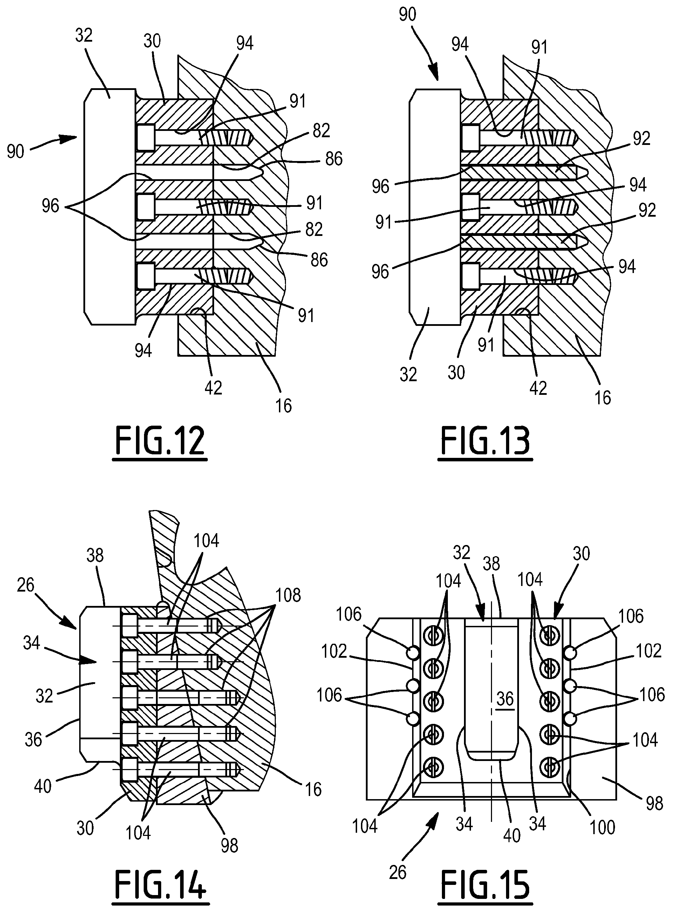

A l'étape suivante, la clavette de remplacement 90 est approchée de l'embrèvement 42, par exemple à l'aide d'une perche ou à l'aide du robot 72 (figure 11), et placée dans cet embrèvement 42. La clavette de remplacement 90 présente sensiblement la même forme générale et les mêmes cotes que la clavette d'origine 26. Puis, comme illustré sur la figure 12, des vis 91 sont vissées sans serrage au couple, dans les orifices 47 déjà existants dans la plaque de support de coeur. Les vis 91 sont vissées par le robot 72.

Puis, des pions 92 sont engagés en force à une valeur d'effort bien définie , dans les alésages 82, de manière à positionner très précisément la clavette de remplacement 90.

Dans ce but, la clavette de remplacement 88 comporte des trous de passage 94 pour les vis 90, et des trous de passage 96 pour les pions 92. Les trous de passage 94 et 96 sont usinés en atelier, à des positions prédéterminées, calculés en fonction des positions circonférentielles et axiales repérées sur la clavette d'origine. Les trous de passage 96 peuvent être usinés avec une grande précision, avec un diamètre interne correspondant au diamètre externe des pions 92. Comme décrit plus haut, les alésages 82 sont usinés avec une précision inférieure en terme de diamètre. Ceci est compensé par le fait qu'ils sont coniques et que l'usinage garanti une très bonne précision du cône. Ainsi, même si le diamètre nominal des alésages 82 est légèrement trop grand, l'extrémité des pions 92 vient se positionner sur la partie conique 86.

On effectue ensuite une vérification de la position des faces latérales de la clavette de remplacement par rapport au repère fixe 68. Ces positions doivent correspondre exactement aux positions repérées sur la clavette d'origine. Cette opération est effectuée avec le palpeur 75.

Au cours de cette étape, on vérifie également les positions des alésages 82 par rapport à leurs positions théoriques.

Au cas où la position relevée diffère de la position souhaitée, il est possible :
- soit de réusiner la glissière correspondante, de manière à s'assurer que l'écartement entre les faces latérales de la clavette de remplacement et la glissière est conforme aux spécifications ;
- soit reprendre par usinage une clavette de secours, puis démonter la clavette de remplacement et monter la clavette de secours à la place de la clavette de remplacement.

On effectue dans ce cas une vérification supplémentaire, finale, de la position de la nouvelle clavette par rapport au repère fixe 68, verticalement et circonférentiellement.

Les vis 91 et les pions 92 sont enfin sertis en position.

Il est à noter que, du fait de l'ajout des deux pions 92, il n'est plus nécessaire de prévoir une soudure de liaison entre la clavette de remplacement 90 et la plaque de support de coeur 16. La résistance mécanique de la liaison, obtenue à l'aide des six vis 91 et deux pions 92, est suffisante.

Le procédé s'applique également aux réacteurs nucléaires du palier 900 MWe, du type CPO. Ces réacteurs sont semblables à ceux décrits en référence à la figure 1. Toutefois, ils sont équipés de dispositifs de guidage 24 légèrement différents, illustrés sur les figures 14 et 15. Pour ce type de réacteur, les clavettes 26 sont fixées à la plaque de support de coeur 16 à travers une pièce intermédiaire 98. La pièce 98 est soudée sur une surface radialement extérieure de la plaque de support de coeur 16. Considéré en section dans un plan radial, comme sur la figure 14, la pièce intermédiaire 98 présente une forme de coin, d'épaisseur décroissante du bas vers le haut.

La pièce 98 comporte un embrèvement 100 dans lequel est reçue la partie de fixation 30 de la clavette. La partie 30 est montée frettée dans l'embrèvement 100. Le frettage est situé sur des flancs d'encastrement verticaux 102 de l'embrèvement 100.

Par ailleurs, la clavette 26 est fixée à la plaque de support de coeur 16 par l'intermédiaire de dix vis 104 et de six pions 106. Les vis 104 traversent entièrement la pièce intermédiaire 98 et sont visées dans des trous taraudés 108 ménagés dans la plaque de support de coeur 16. Les pions 106 sont montés dans l'interstice entre la partie 30 de la clavette 26 et les flancs 102.

Le procédé de remplacement de la clavette des figures 14 et 15 est entièrement semblable à celui décrit ci-dessus, à l'exception des quelques détails suivants. A l'étape de démontage, il est nécessaire non seulement de démonter les vis de fixation 104 mais également de retirer les pions 106. Les pions 106 sont usinés par exemple par électroérosion. La clavette de remplacement 90 est fixée à la plaque de support de coeur par dix vis, similaires aux vis 104 et deux pions de positionnement, engagés dans des alésages de positionnement traversant à la fois la pièce intermédiaire 98 et la plaque de support de fond 16

Il n'existe plus de pion monté entre la partie de fixation 30 et les flancs d'encastrement 102.

## Revendications

1. Procédé de remplacement d'une clavette (26) de guidage d'un équipement interne (10) d'un réacteur nucléaire :
- le réacteur nucléaire (1) ayant une cuve (2) présentant un axe central (X), dans laquelle est placé l'équipement interne (10, 12), la clavette d'origine (26) coopérant avec une glissière (48) pour assurer le guidage de l'équipement interne (10, 12) par rapport à un élément de référence (2, 10) étant la cuve ou étant situé dans la cuve (2);
- la clavette d'origine (26) étant fixée à l'un de l'équipement interne (10, 12) et de l'élément de référence (2, 10), la glissière (48) étant fixée à l'autre de l'équipement interne (10, 12) et de l'élément de référence (2, 10) ;
- la clavette d'origine (26) présentant des faces latérales (34) sensiblement radiales ayant des surfaces (58) altérées par frottement contre la glissière (48), et des surfaces saines (60, 62, 64) non altérées par frottement contre la glissière (48); le procédé comprenant les étapes ci-dessous :
- création d'un repère fixe (68);
- repérage d'une position circonférentielle d'origine des surfaces saines (60, 62, 64) de la clavette d'origine (26) autour de l'axe central (X) par rapport au repère fixe (68);
- démontage la clavette d'origine (26);
- mise en position circonférentielle d'une clavette de remplacement (90) autour de l'axe central (X) par rapport à l'équipement interne (10, 12) ou à l'élément de référence (2, 10), en utilisant la position circonférentielle d'origine des surfaces saines (60, 62, 64) obtenues à l'étape de repérage ;
- fixation de la clavette de remplacement (90) à l'équipement interne (10, 12) ou à l'élément de référence (2, 10).

2. Procédé selon la revendication 1, **caractérisé en ce que** l'étape de repérage est effectuée à l'aide d'un palpeur (75) monté sur un robot multiaxes (72).

3. Procédé selon la revendication 1 ou 2, **caractérisé en ce que** le repère de référence (68) est une structure fixe, sur laquelle est montée au moins un équipement mis en oeuvre pour les étapes de repérage et de mise en position.

4. Procédé selon l'une quelconque des revendications précédentes, **caractérisé en ce que** l'étape de mise en position comprend :
- une sous-étape de percement d'au moins un alésage (82) de positionnement dans l'équipement interne (10, 12) ou l'élément de référence (2, 10) ;
- une sous-étape d'engagement d'au moins un pion de positionnement (92) dans l'alésage de positionnement (82) à travers la clavette de remplacement (90).

5. Procédé selon la revendication 4, **caractérisé en ce qu'**une position de l'alésage de positionnement (82) par rapport à l'équipement interne (10, 12) ou l'élément de référence (2, 12) est déterminée à partir de la position circonférentielle d'origine des surfaces saines (60, 62, 64).

6. Procédé selon la revendication 4 ou 5, **caractérisé en ce que** la sous-étape de percement est effectuée avant l'étape de démontage de la clavette d'origine (26).

7. Procédé selon l'une quelconque des revendications 4 à 6, **caractérisé en ce que** le percement est effectué par électroérosion.

8. Procédé selon l'une quelconque des revendications 4 à 7, **caractérisé en ce que** l'alésage de positionnement (82) présente un fond tronconique (86).

9. Procédé selon l'une quelconque des revendications précédentes, **caractérisé en ce qu'**il comprend en outre une étape de repérage d'une position axiale d'origine d'une surface de référence (40) de la clavette d'origine (26) sensiblement perpendiculaire à l'axe central (X), l'étape de mise en position d'une clavette de remplacement (90) par rapport à l'équipement interne (10, 12) ou à l'élément de référence (2, 10) étant effectuée en utilisant aussi ladite position axiale d'origine.

10. Procédé selon l'une quelconque des revendications précédentes, **caractérisé en ce que** la clavette (26) est fixée à une plaque (16) de support d'un coeur (3) du réacteur nucléaire (1), la glissière (48) étant fixée à un élément de support (50) solidaire de la cuve (2).

## Patentansprüche

1. Verfahren zum Austauschen einer Führungskeilfeder (26) einer internen Einrichtung (10) eines Kernreaktors, wobei:
- der Kernreaktor (1) einen Behälter (2) aufweist, der eine zentrale Achse (X) hat, in welchem die interne Einrichtung (10, 12) angeordnet ist, wobei die ursprüngliche Keilfeder (26) mit einer Gleitschiene (48) zusammenwirkt, um das Führen der internen Einrichtung (10, 12) bezüglich eines Referenzelements (2, 10), welches das Gefäß ist oder in dem Gefäß (2) angeordnet ist, sicherzustellen,
- die ursprüngliche Keilfeder (26) an einer/ einem von der internen Einrichtung (10, 12) und dem Referenzelement (2, 10) befestigt ist, wobei die Gleitschiene (48) an der/dem anderen von der internen Einrichtung (10, 12) und dem Referenzelement (2, 10) befestigt ist,
- die ursprüngliche Keilfeder (26) im Wesentlichen radiale Seitenflächen (34) aufweist, die Flächen (58), die durch Reibung an der Gleitschiene (48) verändert sind, und unversehrte Flächen (60, 62, 64), die nicht durch Reibung an der Gleitschiene (48) verändert sind, aufweisen,
wobei das Verfahren die folgenden Schritte aufweist:
- Erzeugen eines festen Bezugspunktes (68),
- Anpeilen einer ursprünglichen Umfangsposition der unversehrten Flächen (60, 62, 64) der ursprünglichen Keilfeder (26) um die zentrale Achse (X) bezüglich des festen Bezugspunktes (68),
- Abmontieren der ursprünglichen Keilfeder (26),
- Bringen einer Austauschkeilfeder (90) in Umfangsposition um die zentrale Achse (X) bezüglich der internen Einrichtung (10, 12) oder des Referenzelements (2, 10) unter Verwendung der ursprünglichen Umfangsposition der unversehrten Flächen (60, 62, 64), die im Schritt des Anpeilens erhalten wurden,
- Befestigen der Austauschkeilfeder (90) an der internen Einrichtung (10, 12) oder am Referenzelement (2, 10).

2. Verfahren gemäß Anspruch 1, **dadurch gekennzeichnet, dass** der Schritt des Anpeilens mit Hilfe eines Fühlers (75) durchgeführt wird, der an einem Mehrachsenroboter (72) montiert ist.

3. Verfahren gemäß Anspruch 1 oder 2, **dadurch gekennzeichnet, dass** der Referenz-Bezugspunkt (68) eine feststehende Struktur ist, an der mindestens eine Einrichtung montiert ist, die für den Schritt des Anpeilens und den Schritt des in-Position-Bringens eingesetzt wird.

4. Verfahren gemäß irgendeinem der vorhergehenden Ansprüche, **dadurch gekennzeichnet, dass** der Schritt des in-Position-Bringens aufweist:
- einen Teilschritt des Bohrens mindestens einer Bohrung (82) zum Positionieren in der internen Einrichtung (10, 12) oder dem Referenzelement (2, 10),
- einen Teilschritt des in-Eingriff-Bringens von mindestens einem Positionierungszapfen (92) in der Positionierungsbohrung (82) durch die Austauschkeilfeder (90) hindurch.

5. Verfahren gemäß Anspruch 4, **dadurch gekennzeichnet, dass** eine Position der Positionierungsbohrung (82) bezüglich der internen Einrichtung (10, 12) oder des Referenzelements (2, 12) ausgehend von der ursprünglichen Umfangsposition der unversehrten Flächen (60, 62, 64) bestimmt wird.

6. Verfahren gemäß Anspruch 4 oder 5, **dadurch gekennzeichnet, dass** der Teilschritt des Bohrens vor dem Schritt des Abmontierens der ursprünglichen Keilfeder (26) erfolgt.

7. Verfahren gemäß irgendeinem der Ansprüche 4 bis 6,
**dadurch gekennzeichnet, dass** das Bohren mittels Elektroerosion durchgeführt wird.

8. Verfahren gemäß irgendeinem der Ansprüche 4 bis 7,
**dadurch gekennzeichnet, dass** die Positionierungsbohrung (82) einen kegelstumpfförmigen Boden (86) aufweist.

9. Verfahren gemäß irgendeinem der vorhergehenden Ansprüche, **dadurch gekennzeichnet, dass** es ferner einen Schritt des Anpeilens einer ursprünglichen Axialposition einer Referenzfläche (40) der ursprünglichen Keilfeder (26) aufweist, die im Wesentlichen senkrecht zu der zentralen Achse (X) ist, wobei der Schritt des in-Position-Bringens einer Austauschkeilfeder (90) bezüglich der internen Einrichtung (10, 12) oder des Referenzelements (2, 10) ebenfalls unter Verwendung der ursprünglichen Axialposition durchgeführt wird.

10. Verfahren gemäß irgendeinem der vorhergehenden Ansprüche, **dadurch gekennzeichnet, dass** die Keilfeder (26) an einer Stützplatte (16) eines Kerns (3) des Kernreaktors (1) befestigt wird, wobei die Gleitschiene (48) an einem Stützelement (50) befestigt wird, das mit dem Behälter (2) fest verbunden ist.

## Claims

1. A method for replacing a rail (26) for guiding a piece of equipment (10) inside a nuclear reactor:
- the nuclear reactor (1) having a pressure vessel (2) with a central axis (X), in which the piece of inside equipment (10, 12) is placed, the original rail (26) cooperating with a guideway (48) to guide the piece of inside equipment (10, 12) relative to a reference element (2, 13) being the pressure vessel or being situated in the pressure vessel (2);
- the original rail (26) being fastened to one of the inner piece of equipment (10, 12) and the reference element (2, 10), the guideway (48) being fastened to the other of the inner piece of equipment (10, 12) and the reference element (2, 10);
- the original rail (26) having substantially radial side faces (34) with surfaces (58) altered by rubbing against the guideway (48), and sound surfaces (60, 62, 64) not altered by rubbing against the guideway (48);
the method comprising the steps below:
- creating a fixed reference (68);
- determining an original circumferential position of the sound surfaces (60, 62, 64) of the original rail (26) around the central axis (X) relative to the fixed reference (68);
- disassembling the original rail (26);
- circumferentially positioning a replacement rail (90) around the central axis (X) relative to the piece of inside equipment (10, 12) or the reference element (2, 10), using the original circumferential position of the sound surfaces (60, 62, 64) obtained during the determination step;
- fastening the replacement rail (90) to the piece of inside equipment (10, 12) or the reference element (2, 10).

2. The method according to claim 1, **characterized in that** the coordinate determination step is done using a feeler (75) mounted on a multi-axis robot (72).

3. The method according to claim 1 or 2, **characterized in that** the reference (68) is a fixed structure, on which at least one piece of equipment is mounted that is implemented for the position determination and positioning steps.

4. The process according to any one of the preceding claims, **characterized in that** the positioning step comprising:
- a sub-step for drilling at least one positioning bore (82) in the piece of inside equipment (10, 12) or the reference element (2, 10);
- a sub-step for engaging at least one positioning pin (92) in the positioning bore (82) through the replacement rail (90).

5. The method according to claim 4, **characterized in that** a position of the positioning bore (82) relative to the piece of inside equipment (10, 12) or the reference element (2, 12) is determined from the original circumferential position of the sound surfaces (60, 62, 64).

6. The method according to claim 4 or 5, **characterized in that** the drilling sub-step is done before the step for disassembling the original rail (26).

7. The method according to any one of claims 4 to 6, **characterized in that** the drilling is done by electro-erosion.

8. The method according to any one of claims 4 to 7, **characterized in that** the positioning bore (82) has a frustoconical bottom (86).

9. The method according to any one of the preceding claims, **characterized in that** it further comprises a step for determining an axial position of a reference surface (40) of the original rail (26) substantially perpendicular to the central axis (X), the step for positioning a replacement rail (90) relative to the piece of inside equipment (10, 12) or the reference element (2, 10) also being carried out using said axial position.

10. The method according to any one of the preceding claims, **characterized in that** the rail (26) is fastened to a support plate (16) of a core (3) of the nuclear reactor (1), the guideway (48) being fastened to a support element (50) secured to the pressure vessel (2).
